# EUROPÄISCHE PATENTANMELDUNG

(11) **EP 1 626 271 A1**
(43) Veröffentlichungstag der Anmeldung: **15.02.2006**
(21) Anmeldenummer: 04019330.2
(22) Anmeldetag: 14.08.2004
(51) Int. Cl.: G01N 23/18

(54) **Röntgenprüfverfahren für Fahrzeugreifen**

(71) Anmelder: Collmann GmbH & Co. Spezialmaschinenbau KG, 23558 Lübeck (DE)
(72) Erfinder: Kaczorowski, Richard, 22145 Braak (DE)
(74) Vertreter: Hemmer, Arnd

(57) **Zusammenfassung**

Ein Röntgenprüfverfahren für Fahrzeugreifen (12), bei welchem die Fahrzeugreifen (12) in einer Prüfposition von Röntgenstrahlen einer Röntgenstrahlenquelle (26) durchstrahlt werden und der Fahrzeugreifen (12) in horizontaler Lage von Halteelementen (20, 22) an seiner Außenkontur aufgenommen und in der Prüfposition gehalten wird.

## Beschreibung

Die Erfindung betrifft ein Röntgenprüfverfahren für Fahrzeugreifen mit den im Oberbegriff des Anspruchs 1 angegebenen Merkmalen sowie eine Röntgenprüfvorrichtung zum Ausführen dieses Verfahrens.

Bei der Reifenherstellung ist es üblich geworden, den inneren Aufbau der fertigen Fahrzeugreifen mittels Röntgentechnik zu prüfen. Dazu sind Vorrichtungen zur Röntgenprüfung von Fahrzeugreifen bekannt, bei denen über ein Förderband zugeführte Fahrzeugreifen von einem Manipulator am Innenumfang ergriffen werden und anschließend in eine definierte Prüfposition relativ zu einer Röntgenröhre verbracht werden, in der die Fahrzeugreifen von Röntgenstrahlen durchleuchtet werden.

Da die Fahrzeugreifen zur Erzeugung eines scharfen Röntgenbildes mit der Lauffläche und den Flanken relativ zu einer Bilderfassungseinrichtung in vorbestimmten Abständen positioniert werden müssen, ist es, wenn abwechselnd Fahrzeugreifen mit unterschiedlichen Durchmessern, Flankenbreiten und Laufflächenbreiten geprüft werden sollen, vor dem Ergreifen durch den Manipulator erforderlich, den Reifen zu vermessen, um dann den Manipulator mit dem Reifen in eine entsprechende Position relativ zu dem Bilderfassungssystem bringen zu können.

Des weiteren muss der Manipulator oder der Fahrzeugreifen angepasst an den Durchmesser und die Flankenbreite des Fahrzeugreifens so positioniert werden, dass der Manipulator in den Reifen eingreifen kann.

So weisen die oben beschriebenen Vorrichtungen zur Röntgenprüfung hohe Rüstzeiten auf, was die Gesamtprüfzeit pro Fahrzeugreifen erheblich verlängert. Ferner sind die Positioniersysteme aufwändig und teuer.

Vor diesem Hintergrund liegt der vorliegenden Erfindung die Aufgabe zu Grunde, ein Röntgenprüfverfahren sowie eine Röntgenprüfvorrichtung zur Ausführung des Verfahrens zu schaffen, welche eine einfachere und schnellere Positionierung unterschiedlich dimensionierter Reifen in einer Prüfposition ermöglichen.

Diese Aufgabe wird durch ein Röntgenprüfverfahren gemäß Anspruch 1 sowie durch eine Röntgenprüfvorrichtung gemäß Anspruch 7 gelöst. Vorteilhafte Weiterbildungen der Erfindung ergeben sich aus den Unteransprüchen, der nachfolgenden Beschreibung und den Zeichnungen.

Bei dem erfindungsgemäßen Röntgenprüfverfahren für Fahrzeugreifen wird der Fahrzeugreifen in horizontaler Lage von Halteelementen an seiner Außenkontur aufgenommen und in einer Prüfposition gehalten. In der Prüfposition wird der Fahrzeugreifen von Röntgenstrahlen einer Röntgenstrahlenquelle durchstrahlt. Die Prüfposition ist dabei zweckmäßigerweise eine definierte Position, in welcher die zu durchleuchtenden Reifenteile vorgegebene Abstände zu einer Röntgenröhre und einer Bilderfassungseinrichtung aufweisen.

In einer Aufnahmeposition, die sich vorzugsweise unterhalb der Röntgenstrahlenquelle befindet, ergreifen die Halteelemente den horizontal liegenden Fahrzeugreifen von außen an seiner Lauffläche und nötigenfalls zusätzlich an einer vorzugsweise der Prüfposition abgewandten, unteren Flanke. Dies erleichtert das Positionieren des Fahrzeugreifens in einer Lage, in der die Lauffläche einen definierten Abstand zu der Bilderfassungseinrichtung aufweist, da der Fahrzeugreifen direkt an der Lauffläche gegriffen wird, welche gerade den Reifenbestandteil bildet, welcher relativ zu dem Bilderfassungssystem vorgegeben positioniert werden soll. Bevorzugt verfahren die Halteelemente den Reifen nach dem Ergreifen in vertikaler Richtung in die Prüfposition. In der Prüfposition ist die Röntgenstrahlenquelle so angeordnet, dass sie sich im Innenraum des Fahrzeugreifens befindet. Von dort durchstrahlt sie die Lauffläche und/oder die Flanken des Fahrzeugreifens von innen nach außen.

Zweckmäßigerweise wird der Fahrzeugreifen zwischen zumindest einem in horizontaler Richtung fest positionierten Halteelement und zumindest einen relativ zu diesem beweglichen zweiten Halteelement aufgenommen. Das fest positionierte Halteelement gewährleistet eine definierte horizontale Position des Fahrzeugreifens und insbesondere dessen Lauffläche unabhängig von dessen Außendurchmesser. Bevor der Fahrzeugreifen in der Aufnahmeposition liegend von den beiden Halteelementen ergriffen wird, ist das zweite Halteelement soweit von dem ersten Halteelement horizontal beabstandet, dass alle der Aufnahmeposition zugeführten Fahrzeugreifen unabhängig von ihren Außenabmessungen von den Halteelementen ergriffen werden können, d.h., dass der Abstand von erstem und zweiten Halteelement größer als der größte Außendurchmesser der aufzunehmenden Fahrzeugreifen ist. Dabei ist es bei dieser Anordnung der beiden Halteelemente nicht erforderlich, dass der Fahrzeugreifen in der Aufnahmeposition exakt positioniert ist, solange er zwischen dem ersten und dem zweiten Halteelement angeordnet ist.

Befindet sich ein Fahrzeugreifen in der Aufnahmeposition, wird das zweite Halteelement in horizontaler Richtung so bewegt, dass es den Fahrzeugreifen an seiner Außenkontur kontaktiert und den Reifen in Richtung des ersten Halteelements verschiebt, bis der Reifen zwischen dem ersten und dem zweiten Halteelement fixiert ist. Bevorzugt heben die beiden Halteelemente den Fahrzeugreifen anschließend in vertikaler Richtung in die Prüfposition. Nach Abschluss der Röntgenprüfung senken die Halteelemente den Fahrzeugreifen wieder in die Aufnahmeposition ab und das zweite, horizontal bewegliche Halteelement gibt den Fahrzeugreifen mittels einer Horizontalbewegung, durch die der Abstand zu dem ersten Halteelement vergrößert wird, wieder frei.

Vorteilhaft wird ein Bild des von Röntgenstrahlen durchstrahlten Fahrzeugreifens von einem Bilderfassungssystem erfasst, welches zumindest in der Prüfposition in einer vorgegebenen Position relativ zu dem fest positionierten Halteelement angeordnet ist. Dies bedeutet, dass das fest positionierte Halteelement in der Prüfposition eine fest vorgegebene, vom jeweiligen Durchmesser des zu prüfenden Reifens unabhängige relative Position, insbesondere einen vorgegebenen horizontalen Abstand zu dem Bilderfassungssystem hat. Dies ermöglicht eine automatische Ausrichtung des zu durchleuchtenden Teils, insbesondere der Lauffläche und der angrenzenden Flanken des Fahrzeugreifens zu dem Bilderfassungssystem, ohne den Fahrzeugreifen zuvor vermessen zu müssen. Dadurch, dass nach dem Ergreifen des Fahrzeugreifens zwischen den Halteelementen die zu durchleuchtende Lauffläche des Fahrzeugreifens an dem in horizontaler Richtung fest positionierten Halteelement anliegt, befindet sich die Lauffläche unabhängig vom Reifendurchmesser immer in einem vorgegebenen relativen Abstand zu dem Bilderfassungssystem, wenn das fest positionierte Halteelement einen fest vorgegebenen Abstand zu dem Bilderfassungssystem hat.

Bevorzugt wird zum Positionieren des Fahrzeugreifens in vertikaler Richtung zunächst ein Anschlagelement an einer ersten, vorzugsweise der unten liegenden, Flanke des in horizontaler Richtung angeordneten Fahrzeugreifens zur Anlage gebracht und gehalten. Anschließend wird das Anschlagelement gemeinsam mit dem Fahrzeugreifen in vertikaler Richtung bewegt, wobei ein Sensorelement derart gekoppelt mit dem Anschlagelement in vertikaler Richtung bewegt wird, dass es sich entgegengesetzt zu dem Anschlagelement bezüglich eines vorgegebenen Zentrierpunkts stets um das gleiche Maß bewegt wie das Anschlagelement. Die vertikale Bewegung des Fahrzeugreifens wird gestoppt, wenn das Sensorelement die vertikale Position einer zweiten entgegengesetzt gerichteten Flanke des Fahrzeugreifens erreicht und diese erfasst. Der Fahrzeugreifen wird somit mit seinen Flanken zwischen dem Anschlagelement, welches auch von einem der Halteelemente gebildet werden kann, und dem Sensorelement positioniert. Während das Anschlagelement zusammen mit dem Fahrzeugreifen in vertikaler Richtung bewegt wird, kann diese Bewegung von einem Getriebe auf das Sensorelement übertragen werden. Das Getriebe wandelt die z.B. antriebsseitig von dem Anschlagelement eingeleitete Bewegung so um, dass das Sensorelement in entgegengesetzter Richtung zu dem Anschlagelement mit derselben Geschwindigkeit bewegt wird. Dadurch erfolgen die Bewegungen des Anschlagelements und des Sensorelements bezüglich des Zentrierpunkts stets um dieselbe Wegstrecke.

Der Zentrierpunkt liegt vorzugsweise in der horizontalen Mittelebene von Röntgenstrahlenquelle und Bilderfassungssystem, d.h. einer sich horizontal erstreckenden Ebene durch die vertikalen Mittelpunkte von Röntgenstrahlenquelle und Bilderfassungssystem. Die gekoppelte Bewegung von Anschlagelement und Sensorelement bewirkt, dass in dem Moment, in dem das Sensorelement die zweite Reifenflanke erfasst, das Sensorelement und das Anschlagelement jeweils denselben Abstand zu dem Zentrierpunkt haben. Somit haben auch die beiden Reifenflanken in dieser Position denselben Abstand zu dem Zentrierpunkt. Wenn in dieser Position die Bewegung des Reifens gestoppt wird, ist somit sichergestellt, dass die Mittelebene des Reifens, d. h. die Laufflächenmitte des Reifens in einer Ebene mit dem Zentrierpunkt und somit vorzugsweise auch in einer Ebene mit den Mittelpunkten von Röntgenröhre und Bilderfassungssystem liegt. So wird die Reifenmitte auf einfache Weise unabhängig von der jeweiligen Laufflächenbreite des Fahrzeugreifens auf der vorgegebenen vertikalen Position des Zentrierpunktes angeordnet bzw. der Fahrzeugreifen bezüglich des in vertikaler Richtung vorgegebenen Zentrierpunktes zentriert. Je nach Art des verwendeten Sensorelementes kann die Erfassung der Flanke des Fahrzeugreifens durch Berührung der Flanke oder auch berührungslos erfolgen.

Auf diese Weise ist es möglich, Fahrzeugreifen unabhängig von ihrer Laufflächenbreite ohne zusätzlichen Messaufwand in eine Prüfposition zu bringen, in der die Röntgenstrahlenquelle bezüglich der Laufflächenbreite des Reifens mittig positioniert ist. Auch diese Vorgehensweise verkürzt die Prüfzeit pro Fahrzeugreifen, insbesondere dann, wenn Fahrzeugreifen mit unterschiedlicher Laufflächenbreite in abwechselnder, nicht vorbestimmter Reihenfolge in einer Vorrichtung geprüft werden. Das Sensorelement kann während der gesamten Bewegung des Anschlagelements mit diesem gekoppelt bewegt werden. Es kann aber auch günstig sein, das Sensorelement nur in einem Teilabschnitt des Bewegungsbereichs des Anschlagelements mit diesem gekoppelt zu bewegen und so den Verfahrweg des Sensorelements zu verkleinern. Beispielsweise ist es möglich, dass das Anschlagelement während eines ersten Abschnitts seiner Vertikalbewegung ohne Kopplung mit dem Sensorelement bewegt wird und in einem zweiten Bewegungsabschnitt mit dem Sensorelement gekoppelt wird, so dass sich das Anschlagelement und das Sensorelement, welches zum Zeitpunkt des Koppelns den gleichen vertikalen Abstand wie das Anschlagelement zu dem Zentrierpunkt aufweist, in der oben beschriebenen Weise gekoppelt bewegen.

Die Kopplung der Bewegung des Anschlag- und des Sensorelementes kann rein mechanisch über ein Getriebe, beispielsweise einen Riementrieb oder einen Zahnstangentrieb erfolgen. Alternativ können unabhängige Antriebe vorgesehen sein, welche lediglich über eine gemeinsame elektronische Steuerung bzw. Regelung miteinander gekoppelt sind.

In einer weiteren bevorzugten Ausführungsform des Röntgenprüfverfahrens wird der Fahrzeugreifen von zumindest zwei an entgegengesetzten Flanken zur Anlage kommenden Greifelementen in vertikaler Richtung in der Prüfposition positioniert, wobei die beiden Greifelemente zumindest in einem Abschnitt ihres Bewegungsbereichs bezüglich eines Mittelpunkts der Strecke zwischen den beiden Greifelementen derart gekoppelt aufeinander zu bewegt werden, dass sich die beiden Greifelemente bezüglich des Mittelpunkts stets um das gleiche Maß bewegen. Dabei ersetzen die Greifelemente die oben beschriebenen Anschlag- und Sensorelemente. Die gekoppelte Bewegung der beiden Greifelemente entspricht der oben beschriebenen gekoppelten Bewegung von Sensor- und Anschlagelement. Dies bewirkt, dass in dem Moment, in dem beide Greifelemente an entgegengesetzten Flanken des Fahrzeugreifens anliegen, die Mitte der Lauffläche in einer Ebene mit einem festen Zentrierpunkt positioniert ist, welcher dem Mittelpunkt zwischen den beiden Greifelementen entspricht. Die vertikale Bewegung der Greifelemente kann in diesem Moment beispielsweise aufgrund von Signalen von Sensorelementen, welche den Kontakt mit den Reifenflanken erfassen, gestoppt werden. Alternativ kann der Kontakt beispielsweise aufgrund einer erhöhten Leistung des Antriebs der Greifelemente erfasst werden.

Zweckdienlich wird die Röntgenstrahlenquelle auf einen fest vorgegebenen horizontalen Abstand zu dem Bilderfassungssystem zugestellt. Das Zustellmaß wird dabei vorzugsweise an die zu prüfenden Fahrzeugreifen mit der größten Flankenbreite sowie dem kleinsten Durchmesser angepasst. Auf diese Weise wird sichergestellt, dass sowohl bei den Reifen mit größter Flankenbreite als auch bei den Reifen mit kleinstem Durchmesser die Röntgenstrahlquelle in vertikaler Richtung in das Reifeninnere verfahren werden kann, um anschließend horizontal auf das vorgegebene Maß zu dem Bilderfassungssystem zugestellt werden kann. Die horizontale Ausrichtung bzw. Zustellung der Röntgenstrahlenquelle zu dem Fahrzeugreifen und dem Bilderfassungssystem erfolgt, indem die Röntgenstrahlenquelle nach dem vertikalen Eintreten in das Reifeninnere horizontal in eine fest vorgegebene Position zugestellt wird, in der die Röntgenstrahlenquelle das Innere eines Fahrzeugreifens unabhängig von dessen Durchmesser sowie Laufflächen- und Flankenbreite von Wulst zu Wulst durchstrahlen kann.

Vorteilhaft wird der Fahrzeugreifen in der Prüfposition an seiner Außenkontur in eine Drehbewegung versetzt und in Umfangsrichtung um zumindest 360° relativ zu dem Bilderfassungssystem gedreht. Das Einleiten der Drehbewegung an der Außenkontur des Fahrzeugreifens ermöglicht es, dass mit einer konstanten Antriebsgeschwindigkeit bei unterschiedlichen Reifendurchmessern immer die gleiche Umfangsgeschwindigkeit der Fahrzeugreifen erzielt wird. Die Umfangsgeschwindigkeit ist zweckmäßigerweise so gewählt, dass beispielsweise eine Kontrollperson mögliche Fehlstellen eines Reifens an einem an dem Bilderfassungssystem angeschlossenen Kontrollmonitor erkennen kann. Besonders günstig werden die Fahrzeugreifen über einen gleich langen Zeitraum in der Prüfposition gedreht, wobei die Dauer der Drehung vorzugsweise so bemessen ist, dass der zu prüfende Fahrzeugreifen mit dem größten Durchmesser um 360° gedreht wird. Auf diese Weise kann jeder Fahrzeugreifen über seinen gesamten Umfang von der Röntgenstrahlenquelle durchstrahlt werden, ohne dass der Antrieb für die Reifendrehung an unterschiedliche Reifendurchmesser angepasst werden muss.

Zum Ausführen des oben beschriebenen Röntgenprüfverfahrens ist eine Röntgenprüfvorrichtung zum Prüfen von Fahrzeugreifen mit einer Röntgenstrahlenquelle, einem Bilderfassungssystem sowie Halteelementen zum Halten und Positionieren der Fahrzeugreifen vorgesehen, wobei die Halteelemente derart ausgebildet sind, dass sie den Fahrzeugreifen in horizontaler Lage an seiner Außenkontur ergreifen können. Zum Aufnehmen des Fahrzeugreifens weisen die Halteelemente Anlageflächen auf, die die Anlage der Halteelemente an der Lauffläche des Fahrzeugreifens ermöglichen. Vorteilhaft weist zumindest ein Halteelement eine weitere Anlagefläche auf, die so ausgebildet ist, dass das Halteelement einen in der Aufnahmeposition liegenden Fahrzeugreifen mit dieser zusätzlichen Anlagefläche untergreifen kann und an der unteren Flanke des Fahrzeugreifens zur Anlage kommt. Diese Anlagefläche sichert den ergriffenen Fahrzeugreifen gegen ein Herausrutschen zwischen den am Außenumfang anliegenden Anlageflächen. Beispielsweise können die Halteelemente L-förmig ausgebildet sein mit einem ersten vertikal ausgerichteten Abschnitt und einem zweiten horizontal ausgerichteten Abschnitt. An dem ersten vertikalen Abschnitt der Halteelemente ist jeweils eine Anlagefläche zur Anlage an der Lauffläche des Fahrzeugreifens und an dem zweiten horizontal angeordneten Abschnitt des Halteelements ist jeweils eine Anlagefläche zur Anlage an der unteren Flanke des Fahrzeugreifens vorgesehen.

Bevorzugt sind die Anlageflächen der Halteelemente zur Anlage an der Lauffläche und der unteren Flanke des horizontal angeordneten Fahrzeugreifens jeweils mit Rollen versehen. Die Rollen sind parallel zu den anliegenden Wandungen des Fahrzeugreifens ausgerichtet und so angeordnet, dass ein von den Halteelementen an der Außenkontur ergriffener Fahrzeugreifen nur mit den Rollen in Anlage kommt und zwischen den Halteelementen drehbar gelagert ist. Zumindest eine der Rollen ist vorteilhaft an einen Antrieb gekoppelt, dessen Drehbewegung über die Rolle auf den Fahrzeugreifen übertragen wird.

Zweckdienlich sind zumindest zwei Halteelemente vorgesehen, von denen ein erstes Halteelement in horizontaler Richtung fest positioniert ist und ein zweites Halteelement relativ zu dem ersten Halteelement bewegbar ist. Das erste Halteelement dient als Anschlag für den Fahrzeugreifen, wenn dieser waagerecht liegend von dem zweiten Halteelement horizontal positioniert wird. Das zweite Halteelement, welches in horizontaler Richtung bewegbar ausgebildet ist, schiebt den Fahrzeugreifen solange gegen das erste Halteelement, bis der Fahrzeugreifen zwischen erstem und zweitem Halteelement in einer definierten Position geklemmt bzw. fixiert ist. Da das erste Halteelemente zumindest in der Prüfposition in horizontaler Richtung eine fest vorgegebene Position hat, wird dadurch erreicht, dass auch die Lauffläche des Fahrzeugreifens, welche an diesem ersten Halteelement anliegt, in der Prüfposition immer in einer fest vorgegebenen horizontalen Lage positioniert wird, unabhängig von der Größe des Fahrzeugreifens. Nach der Beendigung der Röntgenprüfung ermöglicht das zweite Halteelement die Freigabe des geprüften Fahrzeugreifens, indem es in horizontaler Richtung von dem Fahrzeugreifen wegrückt.

Das Bilderfassungssystem ist zumindest in einer Prüfposition, in der der Fahrzeugreifen geprüft wird, bevorzugt in einer festen Position relativ zu dem fest positionierten ersten Halteelement angeordnet. So weist das Bilderfassungssystem auch zu dem an dem fest positionierten ersten Halteelement anliegenden Fahrzeugreifen immer einen gleich bleibenden horizontalen Abstand auf, d.h., dass sich die Lauffläche des Fahrzeugreifens unabhängig von dessen Außendurchmesser immer in einer definierten Position zu dem Bilderfassungssystem befindet, die eine gute Darstellung des durchstrahlten Fahrzeugreifens sicherstellt.

Vorteilhaft ist das zweite Halteelement dem ersten Halteelement derart gegenüberliegend angeordnet, dass die Halteelemente den Fahrzeugreifen an entgegengesetzten Seiten ergreifen können. Diese Anordnung der Halteelemente gewährleistet, dass die Haltekräfte, die von einander gegenüberliegenden Halteelementen auf den Fahrzeugreifen übertragen werden, einander entgegengesetzt auf einer Wirkungslinie angreifen, sodass der Fahrzeugreifen zwischen dem ersten und zweiten Halteelement sicher gehalten wird und nicht aus seiner Fixierung herausrutschen kann.

Besonders bevorzugt sind vier Halteelemente vorgesehen, von denen jeweils zwei beabstandet zueinander fest miteinander verbunden sind. Eines dieser Paare von Halteelementen bildet das oben beschriebene fest positionierte Halteelement, während das andere Paar dieser Halteelemente das oben beschriebene bewegliche Halteelement bildet. Auf diese Weise wird der Fahrzeugreifen zwischen vier Halteelementen, welche vorzugsweise an den Eckpunkten eines Rechteckes angeordnet sind gehalten, so dass er in keiner horizontalen Richtung zwischen den Halteelementen herausrutschen kann.

In einer bevorzugten Ausführungsform der erfindungsgemäßen Röntgenprüfvorrichtung sind zum Positionieren des Fahrzeugreifens in vertikaler Richtung ein Anschlagelement zur Anlage an einer ersten Flanke des in horizontaler Lage angeordneten Fahrzeugreifens und ein mit dem Anschlagelement gekoppeltes Sensorelement zur Erfassung einer entgegengesetzten zweiten Flanke vorgesehen. Dabei ist das Anschlagelement gemeinsam mit dem Fahrzeugreifen in vertikaler Richtung bewegbar und das Sensorelement derart entgegengesetzt zu dem Anschlagelement bewegbar, dass sich das Anschlagelement und das Sensorelement bezüglich eines vorgegebenen Zentrierpunktes stets um das gleiche Maß bewegen.

Das Anschlagelement kann sowohl zur Anlage an der unteren als auch an der oberen Flanke des Fahrzeugreifens vorgesehen sein. Es ist in vertikaler Richtung verfahrbar ausgebildet und ist mit dem Fahrzeugreifen in vertikaler Richtung, vorzugsweise aufwärts bewegbar, wenn der Fahrzeugreifen in die Prüfposition gehoben wird. Ein an der unteren Flanke des Fahrzeugreifens zur Anlage kommendes Anschlagelement ist hierfür an dem Fahrzeugreifen bzw. an einem den Fahrzeugreifen haltenden Halteelement fixierbar ausgebildet. Bei einem Anschlagelement, das auf der oberen Flanke des Fahrzeugreifens angebracht werden kann, ist diese Fixierbarkeit nicht unbedingt erforderlich, da das Anschlagelement in diesem Fall von einem aufwärts bewegten Reifen auf diesem aufliegend vertikal mitgenommen wird. Als ein an der unteren Flanke des Fahrzeugreifens zur Anlage kommendes Anschlagelement kann auch eines der Halteelemente, die den Fahrzeugreifen an der Außenkontur und der untenliegenden Reifenflanke ergreifen, verwendet werden.

Mit dem Anschlagelement gekoppelt ist ein Sensorelement, das beim Verfahren des Fahrzeugreifens in entgegengesetzter Richtung, d. h. bei einer Aufwärtsbewegung des Fahrzeugreifens abwärts bewegt wird. Das Sensorelement kann entweder als ein berührendes Sensorelement, beispielsweise in Form eines Kontaktschalters bzw. in Form eines einen Schalter auslösenden weiteren Anschlagelements, oder als berührungsloses Sensorelement, zum Beispiel als Lichtschranke oder kapazitiver Sensor, ausgebildet sein. Dadurch, dass das Anschlagelement und das Sensorelement zumindest in einem Teil ihres Bewegungsbereiches miteinander gekoppelt sind, wird erreicht, dass sich beide, wie oben beschrieben, immer um das gleiche Maß bezüglich eines in vertikaler Richtung feststehenden Zentrierpunktes bewegen. Auf diese Weise kann der Fahrzeugreifen sehr einfach ohne Vermessung in vertikaler Richtung positioniert werden, so dass die Laufflächenmitte in einer Ebene mit dem Zentrierpunkt liegt, wenn Sensorelement und Anschlagelement die beiden entgegengesetzten Reifenflanken berühren bzw. erfassen.

Vorteilhaft ist das Sensorelement so mit einer für die Vertikalbewegung der Halteelemente vorgesehenen Antriebssteuerung verbunden, dass ein Signal des Sensorelements die Aufwärtsbewegung der Halteelemente bzw. des Fahrzeugreifens bei Erreichen der zweiten Flanke des Fahrzeugreifens stoppt.

Eine weitere vorteilhafte Ausbildung der Röntgenprüfvorrichtung sieht vor, dass an der Röntgenprüfvorrichtung als Anschlag- und Sensorelement zumindest zwei vertikal voneinander beabstandete und bewegbare Greifelemente zur vertikalen Positionierung des Fahrzeugreifens vorgesehen sind. Diese beiden Greifelemente sind zumindest in einem Abschnitt ihres Bewegungsbereichs bezüglich eines Mittelpunkts der Strecke zwischen den beiden Greifelementen derart gekoppelt zueinander und voneinander weg bewegbar, dass sich die beiden Greifelemente bezüglich des Mittelpunkts stets um das gleiche Maß bewegen. Die Greifelemente erfüllen so die Funktion der oben beschriebenen Anschlag- und Sensorelemente. Die Kopplung der beiden Greifelemente kann so erfolgen, das die Greifelemente über deren gesamten Bewegungsbereich gekoppelt immer um das gleiche Maß bewegt werden. Ferner ist es möglich, das zuerst gemeinsam mit dem Fahrzeugreifen vertikal bewegte Greifelement so auszubilden, dass es nur in einem letzten Abschnitt seines Bewegungsbereichs mit dem zweiten Greifelement in der beschriebenen Weise gekoppelt ist. Auf diese Weise wird der maximal auftretende Abstand der beiden Greifelemente zueinander vorteilhaft verkleinert.

Die Kopplung des Anschlagelements mit dem Sensorelement bzw. der beiden Greifelemente ist zweckmäßigerweise mechanisch oder elektrisch ausgebildet. Für die Kopplung des Anschlagelements mit dem Sensorelement ist z. B. ein Getriebe vorgesehen. Das Getriebe kann kraft- oder formschlüssig ausgebildet sein und überträgt die antriebsseitig eingeleitete Bewegung des Anschlagelements abtriebsseitig unter Umkehrung der Bewegungsrichtung auf das Sensorelement, so dass das Sensorelement entgegengesetzt zu dem Anschlagelement bewegt wird oder umgekehrt. Die mechanische Kopplung des Anschlagelements mit dem Sensorelement kann über ein Getriebe erfolgen. Vorzugsweise ist sowohl das Anschlagelement als auch das Sensorelement jeweils an einer Zahnstange angebunden und diese Zahnstangen über ein Zahnrad miteinander gekoppelt. Es kann auch vorteilhaft sein, das Getriebe als Zugmittelgetriebe, z.B. als Riementrieb auszubilden. In diesem Fall sind das Anschlagelement und das Sensorelement an gegenüberliegenden Trums des Riementriebs angeordnet. Eine elektrische Kopplung des Anschlagelements mit dem Sensorelement kann beispielsweise über Schrittmotoren oder derart ausgebildet sein, dass eine Wegaufnahme vorgesehen ist, die den vertikalen Verfahrweg des Anschlagelements aufnimmt und einer elektronischen Steuerung zuführt, die auf der Grundlage dieser Werte eine dem Verfahrweg des Anschlagelements gegenläufige Bewegung des Sensorelements einleitet und steuert.

Zweckmäßigerweise liegt die Röntgenstrahlenquelle in derselben horizontalen Ebene wie der Zentrierpunkt, bezüglich dem das Anschlagelement und das Sensorelement bzw. die beiden Greifelemente gekoppelt bewegbar sind. Auf diese Weise ist sichergestellt, dass die Fahrzeugreifen unabhängig von der Breite ihrer Lauffläche in der oben beschriebenen Weise immer so positioniert werden, dass die Röntgenstrahlenquelle auf Höhe der Laufflächenmitte des Fahrzeugreifens angeordnet ist.

Die Erfindung ist nachfolgend anhand von in den Zeichnungen dargestellten Ausführungsbeispielen näher erläutert. Es zeigen:
- Fig. 1: eine erfindungsgemäße Röntgenprüfvorrichtung mit einem Fahr- zeugreifen in der Aufnahmeposition,
- Fig. 2: die in Fig. 1 dargestellte Röntgenprüfvorrichtung mit einem Fahr- zeugreifen in der Prüfposition,
- Fig. 3: die in Fig. 2 dargestellte Röntgenprüfvorrichtung mit einem teil- weise verschwenkten Bilderfassungssystem,
- Fig. 4: die in Fig. 2 dargestellte Röntgenprüfvorrichtung mit einem ver- schwenkten Bilderfassungssystem,
- Fig. 5: eine Röntgenprüfvorrichtung mit einem U-förmigen Bilderfas- sungssystem,
- Fig. 6: eine Röntgenprüfvorrichtung mit einer aus einem Anschlagele- ment und einem berührenden Sensorelement bestehenden Posi- tioniervorrichtung vor dem vertikalen Positionieren eines Fahr- zeugreifens,
- Fig. 7: die in Fig. 6 dargestellte Röntgenprüfvorrichtung mit einem Fahr- zeugreifen in der Prüfposition,
- Fig. 8: eine Röntgenprüfvorrichtung mit einer aus einem Anschlagele- ment und einem berührungslosen Sensorelement bestehenden Positioniervorrichtung vor dem vertikalen Positionieren eines Fahr- zeugreifens,
- Fig. 9: die in Fig. 8 dargestellte Röntgenprüfvorrichtung mit einem Fahr- zeugreifen in der Prüfposition,
- Fig. 10: eine Röntgenprüfvorrichtung, in der ein Anschlagelement mit einem berührungslosen Sensorelement über einen Riementrieb gekoppelt ist, mit einem Fahrzeugreifen vor dem vertikalen Posi- tionieren und
- Fig. 11: die in Fig. 10 dargestellte Röntgenprüfvorrichtung mit einem Fahrzeugreifen in der Prüfposition.

In den Figuren ist ein Strahlenschutzraum 2 dargestellt, in dem sich die erfindungsgemäße Röntgenprüfvorrichtung 4 befindet. Ausgehend von Querträgern 6, die an der Decke 8 des Strahlenschutzraums 2 angeordnet sind, erstreckt sich die Röntgenprüfvorrichtung 4 senkrecht in Richtung des Bodens des Strahlenschutzraums 2. Direkt unterhalb der Röntgenprüfvorrichtung 4 ist ein Rollentisch 10 angeordnet.

Der Rollentisch 10 ist Teil einer nicht dargestellten Fördereinrichtung, über die der Röntgenprüfvorrichtung 4 Fahrzeugreifen 12 zugeführt werden und nach Abschluss der Röntgenprüfung abgeführt werden. Hierzu weist der Strahlenschutzraum 2 zwei Klappen auf, durch die die Fahrzeugreifen 12 in den Strahlenschutzraum 2 gelangen bzw. diesen verlassen. Die Klappen sind in den Figuren nicht dargestellt.

Die Röntgenprüfvorrichtung 4 beinhaltet eine Tragstruktur, welche Tragelemente 14 aufweist, die sich ausgehend von den Querträgern 6 senkrecht in Richtung des Rollentisches 10 erstrecken. An den Tragelementen 14 ist ein Rahmen angebunden. Dieser weist zwei Tragelemente 16 auf, die parallel zueinander in einer gemeinsamen von dem Rollentisch 10 beabstandeten Ebene angeordnet sind. Oberhalb der Tragelemente 16, das heißt der Decke 8 des Strahlenschutzraums 2 zugewandt, sind zwei Träger 18 angeordnet. Diese Träger 18 erstrecken sich quer zur Längsausdehnung der Tragelemente 16 und verbinden die Tragelemente 16 miteinander. Auf diese Weise bilden die Tragelemente 16 und die Träger 18 einen Rahmen 19. Der Rahmen 19 ist vertikal in Richtung der Decke 8 des Strahlenschutzraums 2 und in Richtung des Rollentisches 10 verfahrbar ausgebildet. Hierzu ist ein nicht dargestellter Antrieb vorgesehen der in bekannter Weise z.B. pneumatisch oder elektrisch ausgebildet sein kann.

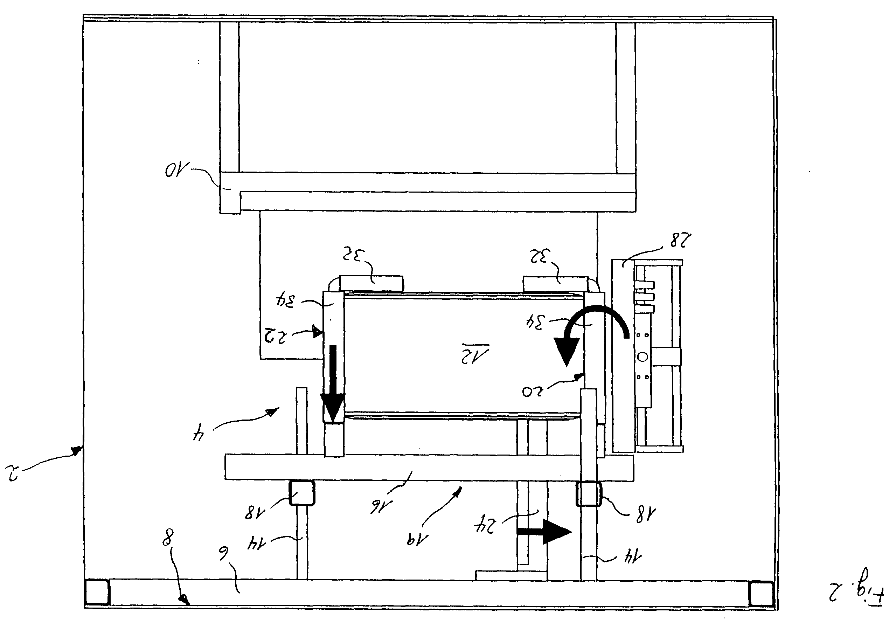

An der Unterseite des Rahmens 19 bzw. an der Unterseite der Tragelemente 16 sind jeweils zwei voneinander beabstandete Halteelemente 20 und Halteelemente 22 angebunden. Von diesen Halteelementen 20 u. 22 ist in der Seitenansicht der Figuren jeweils nur eines sichtbar. Wie aus der Fig. 2 ersichtlich ist, sind die Halteelemente 20 und 22 L-förmig ausgebildet. Sowohl die Halteelemente 20 als auch die Halteelemente 22 weisen einen Abschnitt auf, der sich ausgehend von den Tragelementen 16 senkrecht in Richtung des Rollentisches 10 erstreckt und einen Abschnitt, der parallel zu der Oberfläche des Rollentisches 10 ausgerichtet ist.

Die Halteelemente 20 und die Halteelemente 22 sind jeweils paarweise vorgesehen, wobei jeweils zwei Halteelemente 20 und zwei Halteelemente 22 in der Richtung der Längsausdehnung des Rollentisches 10 fest voneinander beabstandet sind. Im Gegensatz zu den Halteelementen 20, die an den Tragelementen 16 fest angebunden sind, sind die Halteelemente 22 an den Tragelementen 16 verfahrbar angebunden. So können die Halteelemente 22 in Richtung der Längsausdehnung des Tragelements 16 und quer zur Längsausdehnung bzw. Förderrichtung des Rollentisches 10 bewegt werden.

Zum Verfahren der Halteelemente 22 ist ein in den Figuren nicht dargestellter Antrieb vorgesehen, der z.B. elektrisch oder pneumatisch ausgebildet sein kann. Mit Hilfe dieses Antriebs können die Halteelemente 22 auf die beiden Halteelemente 20 zu- bzw. von diesen wegbewegt werden.

An einem der Querträger 6, die an der Decke 8 des Strahlenschutzraums 2 angeordnet sind, ist ein Tragelement 24 angebunden, das sich senkrecht zu dem Querträger 6 in Richtung des Rollentisches 10 erstreckt. An dem freien Ende des Tragelements 24, das heißt an dem von dem Querträger 6 beabstandeten unteren Ende, ist eine Röntgen-Rundstrahlröhre 26 angebunden.

Diese Röntgen-Rundstrahlröhre 26 ist so angeordnet, dass ihr Strahlenkegel im Wesentlichen normal zu der Längsausdehnung der senkrechten Abschnitte der Halteelemente 20 ausgerichtet ist. Das Tragelement 24 mit der daran angeordneten Röntgen-Rundstrahlröhre 26 ist an dem Querträger 6 verfahrbar angebunden. Auf diese Weise kann es über einen in den Figuren nicht dargestellten beispielsweise pneumatischen Antrieb in eine Richtung quer zur Längsausdehnung des Rollentisches 10 entweder auf die Halteelemente 20 oder auf die Halteelemente 22 zu bewegt werden.

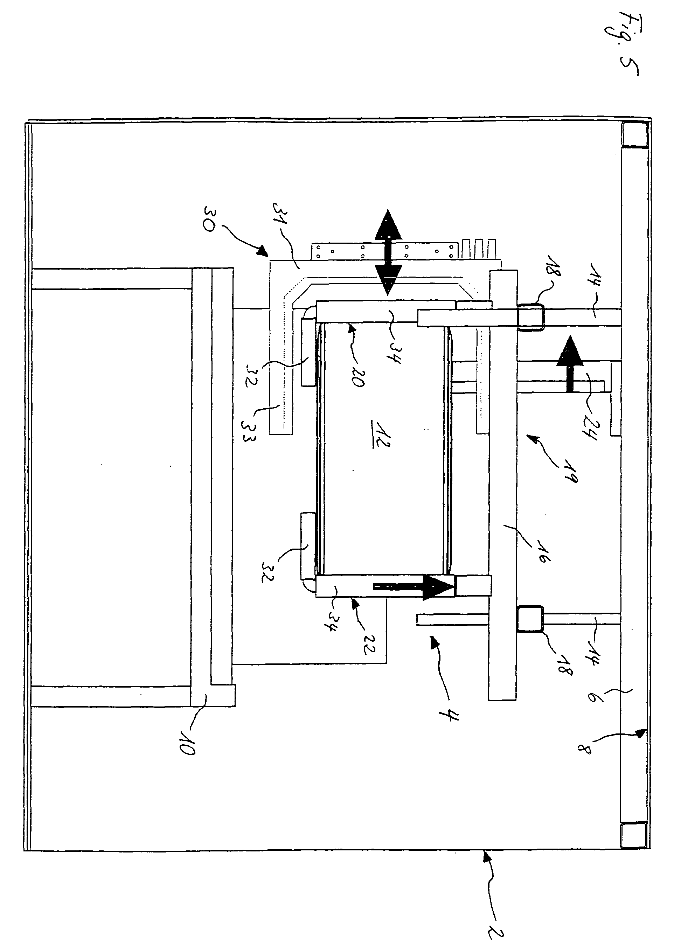

Seitlich der Halteelemente 20 und außerhalb der Haltestruktur, die von den Halteelementen 20 und 22 gebildet wird, ist ein Bilderfassungssystem angeordnet. Bei dem Bilderfassungssystem handelt es sich um eine schwenkbare Linearzeile 28 oder, wie in der Fig. 5 dargestellt um einen U-förmigen Detektor 30. Sowohl die Linearzeile 28 als auch der Detektor 30 dienen zur Erfassung eines von der Röntgen-Rundstrahlröhre 26 durchleuchteten Bereichs eines Fahrzeugreifens 12.

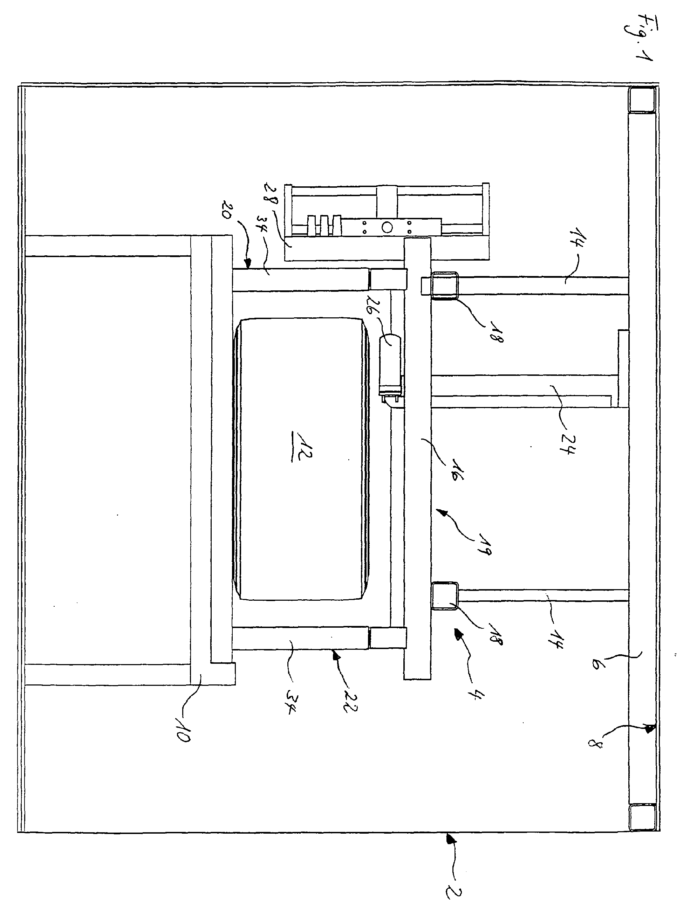

Fig. 1 zeigt die Röntgenprüfvorrichtung 4 vor dem Aufnehmen eines Fahrzeugreifens 12. Der Rahmen 19 und die daran befestigten Halteelemente 22 und 24 sind in vertikaler Richtung soweit nach unten verfahren, dass die horizontalen Abschnitte ebenso wie die daran angrenzenden Enden der vertikalen Abschnitte der Halteelemente 20 und 22 Zwischenräume zwischen den Rollen des Rollentisches 10 in Richtung des Bodens des Strahlenschutzraums 2 durchstoßen. Auf dem Rollentisch 10 liegt in horizontaler Lage ein Fahrzeugreifen 12. Dieser ist so positioniert, dass er sich zwischen den Halteelementen 20 und 22 befindet. Zum Aufnehmen des Fahrzeugreifens 12 werden die beiden Halteelemente 22 in Richtung der Halteelemente 20 horizontal verfahren. Während dieser Verfahrbewegung kontaktieren die vertikalen Abschnitte der Halteelemente 22 die Lauffläche des Fahrzeugreifens 12 und schieben den Fahrzeugreifen 12 in Richtung der Halteelemente 20. Wenn der Fahrzeugreifen 12 die Halteelemente 20 kontaktiert, zentriert er sich selbsttätig zwischen den beiden Halteelementen 20. In dieser Position wird der Fahrzeugreifen 12 von den zwei Halteelementen 20 und den zwei Halteelementen 22 vorgespannt fixiert. An der von dem Fahrzeugreifen 12 abgewandten Seite der Halteelemente 20 ist in einem feststehenden horizontalen Abstand die Linearzeile 28 angeordnet. Hat sich der Fahrzeugreifen 12 zwischen den beiden Halteelementen 20 und 22 zentriert, weist seine an den Halteelementen 20 anliegende Lauffläche einen ebenfalls feststehenden Abstand zu der parallel zur Lauffläche ausgerichteten Linearzeile 28 auf.

Ist der Fahrzeugreifen zwischen den Halteelementen 20 u. 22 fixiert, wird der Rahmen 19 vertikal in Richtung der Decke des Strahlenschutzraums 2 verfahren. Hierdurch kontaktieren auch die horizontalen Abschnitte der Halteelemente 20 und 22 die dem Rollentisch 10 zugewandte untere Flanke des Fahrzeugreifens 12, sodass der Fahrzeugreifen 12 auf diesen horizontalen Abschnitten der Halteelemente 20 und 22 aufliegt und von diesem angehoben wird. Der Fahrzeugreifen 12 wird vertikal soweit in Richtung der Röntgen-Rundstrahlröhre 26 verfahren, dass diese in den Innendruchmesser des Fahrzeugreifens 12 eindringt. Befindet sich die Laufflächenmitte des Fahrzeugreifens 12 in einer horizontalen Ebene mit der Längsachse bzw. Mittelachse der Röntgen-Rundstrahlröhre 26, wird die Verfahrbewegung des Rahmens 19 und damit des Fahrzeugreifens 12 gestoppt.

Die Fig. 2 zeigt den Fahrzeugreifen 12, nachdem er von dem Rahmen 19 und den daran angebundenen Halteelementen 20 und 22 in die Prüfposition verfahren worden ist. In der Prüfposition wird das Tragelement 24 mit der daran angebundenen Röntgen-Rundstrahlröhre 26 in Richtung der Linearzeile 28 verfahren. Auf diese Weise bewegt sich die Röntgen-Rundstrahlröhre 26, die sich im Inneren des Fahrzeugreifens 12 befindet, in Richtung der Lauffläche des Fahrzeugreifens 12.

Wenn die Röntgen-Rundstrahlröhre 26 die zum Durchstrahlen des Fahrzeugreifens 12 notwendige Position eingenommen hat, wird der Fahrzeugreifen 12 in Umfangsrichtung in eine Drehbewegung versetzt. Hierzu weisen die horizontalen Abschnitte der Halteelemente 22 und 24 drehbar gelagerte Rollen 32 auf und die vertikalen Abschnitte der Halteelemente 20 und 22 sind mit drehbar gelagerten Rollen 34 versehen. Eine der Rollen 34 wird über einen nicht dargestellten Antrieb angetrieben, um eine Drehbewegung auf den Fahrzeugreifen 12 zu übertragen. Das Bild der von der der Röntgen-Rundstrahlröhre 26 durchleuchteten Lauffläche des Fahrzeugreifens 12 wird von der Linearzeile 28 erfasst. Aufgrund der Bewegungseinleitung an der Außenkontur des Fahrzeugreifens 12, weisen bei konstanter Antriebsgeschwindigkeit alle zu prüfenden Fahrzeugreifen 12 unabhängig von ihrem Außendurchmesser die gleiche Umfangsgeschwindigkeit auf.

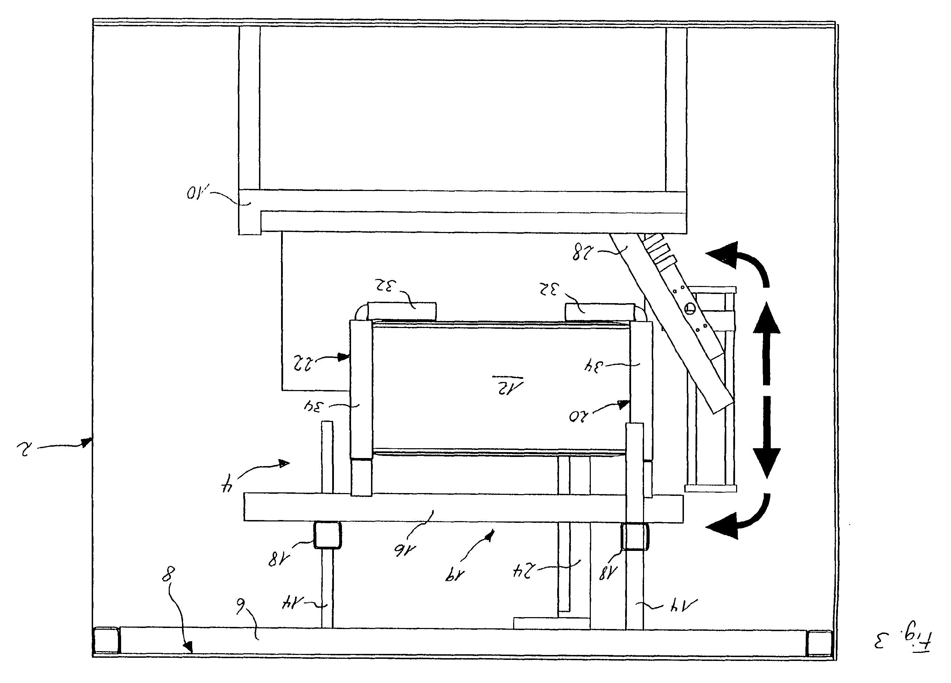

Um auch die beiden Flanken des Fahrzeugreifens 12 untersuchen zu können, ist die Linearzeile 28 schwenkbar ausgebildet und kann wie die Figuren 3, 4 und 5 zeigen derart verschwenkt werden, dass sowohl die dem Rollentisch 10 zugewandte untere Flanke des Fahrzeugreifens 12 als auch die davon beabstandete obere Flanke des Fahrzeugreifens 12 von der Röntgenprüfvorrichtung 4 untersucht werden können.

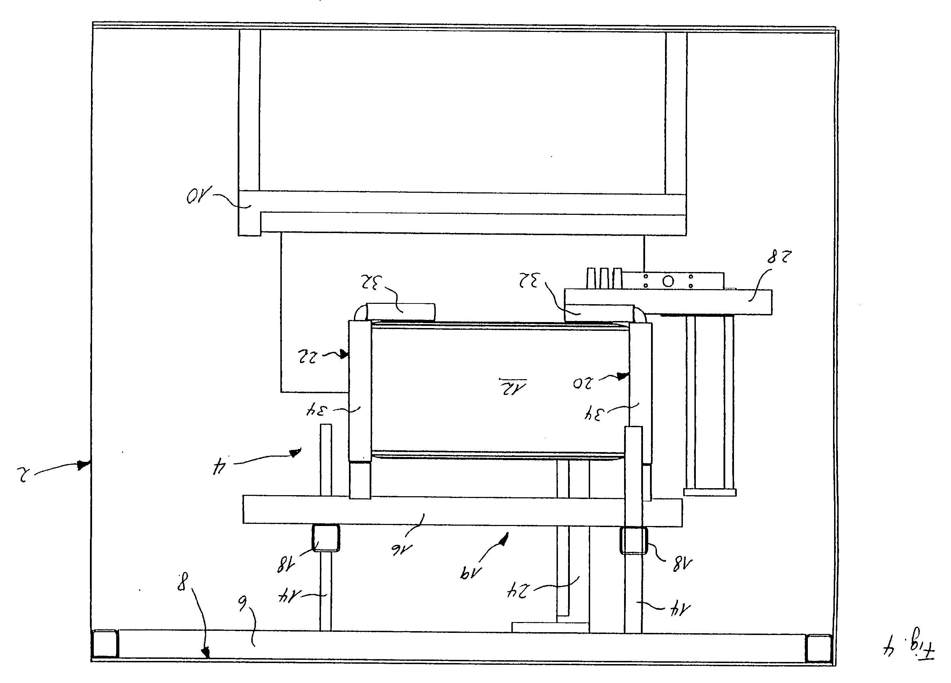

Die Fig. 3 zeigt die Röntgenprüfvorrichtung 4, während die Linearzeile 28 in eine Prüfposition zum Untersuchen der unteren Flanke des Fahrzeugreifens 12 geschwenkt wird. In Fig. 4 ist eine Linearzeile 28 so ausgeschwenkt, dass sie sich in einer parallelen Position zu der unteren Flanke des Fahrzeugreifens 12 befindet. Obwohl in den Figuren nicht dargestellt, kann die Linearzeile 28 auch in eine Position verschwenkt werden, in der sie parallel oberhalb der oberen Flanke des Fahrzeugreifens 12 angeordnet ist, so dass auf diese Weise auch die oberer Flanke des Fahrzeugreifens 12 untersucht werden kann.

Fig. 5 zeigt eine Ausführungsform der Erfindung, in der ein Bilderfassungssystem in Form eines Detektors 30 zur Erfassung des durchleuchteten Bilds des Fahrzeugreifens 12 U-förmig ausgebildet ist. Der Detektor 30 weist einen vertikalen Abschnitt 31 auf, an dessen Enden sich jeweils ein horizontaler Abschnitt 33 in Richtung des Fahrzeugreifens 12 erstreckt. Im Gegensatz zu der Linearzeile 28 ist der Detektor 30 in horizontaler Richtung verfahrbar ausgebildet. Auf diese Weise ist der Detektor 30 zum Durchstrahlen des Fahrzeugreifens 12 in eine Position verfahrbar, in der der vertikale Abschnitt parallel zur Lauffläche des Fahrzeugreifens 12 angeordnet ist, während die horizontalen Abschnitte parallel beabstandet von den Flanken des Fahrzeugreifens 12 angeordnet sind. Nach Abschluss der Röntgenprüfung des Fahrzeugreifens 12 wird der Detektor 30 in waagerechter Richtung so verfahren, dass er sich von dem Fahrzeugreifen 12 entfernt. Auf diese Weise kann der Fahrzeugreifen 12 nach der Röntgenprüfung aus der Prüfposition auf den Rollentisch 10 herabgelassen werden, ohne das diese vertikale Bewegung durch den Detektor 30 behindert wird. Befindet sich ein neuer Fahrzeugreifen 12 in der Prüfposition, wird der Detektor 30 in entgegengesetzter Richtung, das heißt auf den Fahrzeugreifen 12 zu bewegt, bis er den Fahrzeugreifen 12 in der oben beschriebenen Weise umgreift.

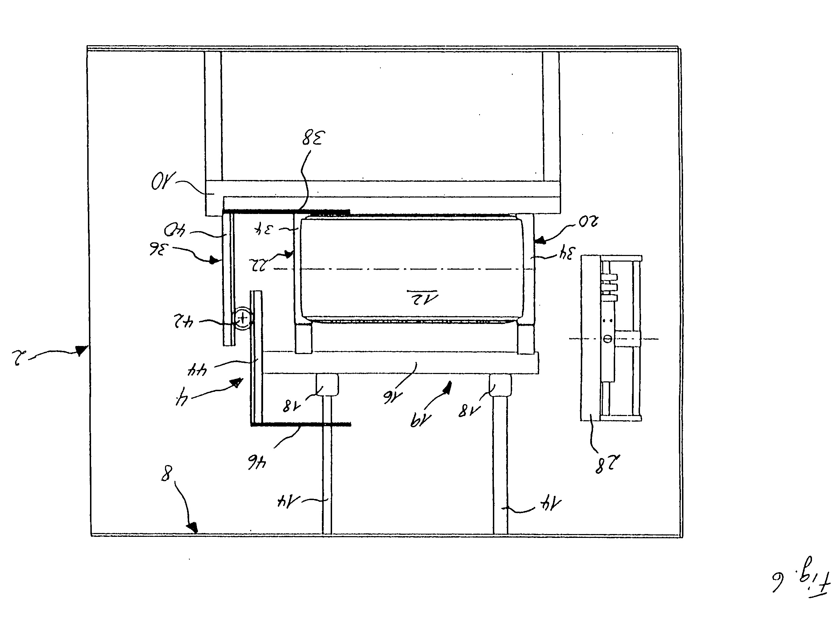

Die Figuren 6 bis 11 zeigen verschiedene Ausführungsformen einer Positioniervorrichtung 36 zum vertikalen Positionieren des Fahrzeugreifens 12 in der Prüfposition.

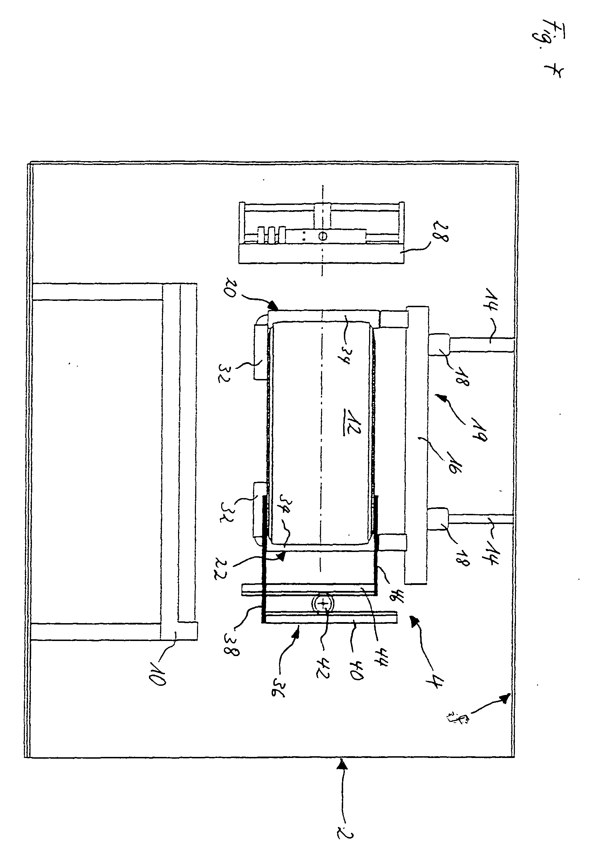

Die in den Figuren 6 und 7 dargestellte Positioniervorrichtung 36 weist ein erstes Anschlagelement 38 auf, das an der unteren dem Rollentisch 10 zugewandten Flanke des Fahrzeugreifens 12 anliegt. Dieses Anschlagelement 38 ist mit einem der Halteelemente 20, 22 oder der Rollen 32 verbunden bzw. gekoppelt. An einem von dem Fahrzeugreifen 12 beabstandeten Ende ist das erste Anschlagelement 38 an einer ersten Zahnstange 40 angebunden, die sich normal zu dem ersten Anschlagelement 38 in vertikaler Richtung erstreckt. Die erste Zahnstange 40 ist mit einem Zahnrad 42 in Eingriff. An dem Zahnrad 42 ist von der Koppelstelle von Zahnstange 40 und Zahnrad 42 diametral entgegengesetzt eine zweite Zahnstange 44 in Eingriff. Diese zweite Zahnstange 44 ist parallel zu der ersten Zahnstange 40 ausgerichtet. An dem von dem ersten Anschlagelement 38 beabstandeten Ende der zweiten Zahnstange 44 ist ein zweites Anschlagelement 46 angeordnet.

Wird der Fahrzeugreifen 12 von den Halteelementen 20 und 22 in vertikaler Richtung in die Prüfposition verfahren, bewegt sich das an der unteren Flanke des Fahrzeugreifens 12 anliegende erste Anschlagelement 38 mit der daran angebundenen ersten Zahnstange 40 ebenfalls vertikal nach oben. Dies bewirkt eine Drehbewegung des Zahnrads 42, wodurch eine vertikale Abwärtsbewegung der zweiten Zahnstange 44 und des daran angebundenen zweiten Anschlagelements 46 erfolgt. Auf diese Weise werden das erste Anschlagelement 38 und das zweite Anschlagelemente 46 in entgegengesetzter Richtung aufeinander zu bewegt. Dabei erfolgt die Bewegung der beiden Anschlagelemente 38 und 46 bezüglich des Drehpunkts des Zahnrads 42, der den Zentrierpunkt der Positioniervorrichtung 36 bildet und in der Prüfebene angeordnet ist, stets um das gleiche Maß.

Die Aufwärtsbewegung der Halteelemente 20 und 22 sowie des dazwischen aufgenommenen Fahrzeugreifens 12 erfolgt so lange, bis, wie in Fig. 7 dargestellt, das zweite Anschlagelement 46 die obere, das heißt von dem Rollentisch abgewandte Flanke des Fahrzeugreifens 12 kontaktiert. Durch den Kontakt des zweiten Anschlagelements 46 mit der oberen Flanke des Fahrzeugreifens 12 wird der für die Vertikalbewegung des Rahmens 19 und der daran angebundenen Halteelemente 20 und 22 zuständige Antrieb beispielsweise durch einen an dem Anschlagelement 46 angeordneten Kontaktschalter abgeschaltet. Der Fahrzeugreifen 12 ist so unabhängig von der Breite seiner Lauffläche exakt in der vorgegeben vertikalen Prüfposition fixiert, d.h., die Reifenmittelebene liegt in einer Ebene mit dem festen Zentrierpunkt, d.h. Drehpunkt des Zahnrads 42. Der Fahrzeugreifen 12 ist somit bezüglich der Röntgenstrahlenquelle 26 sowie der Linearzeile 28 vertikal zentriert.

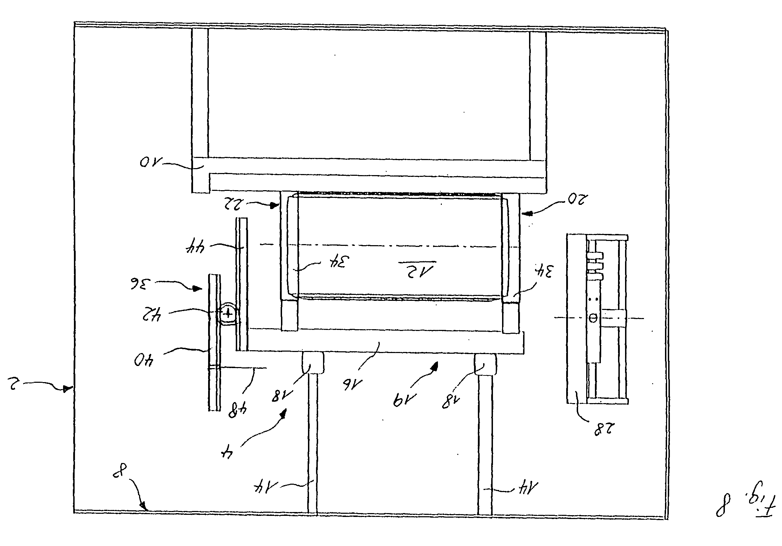

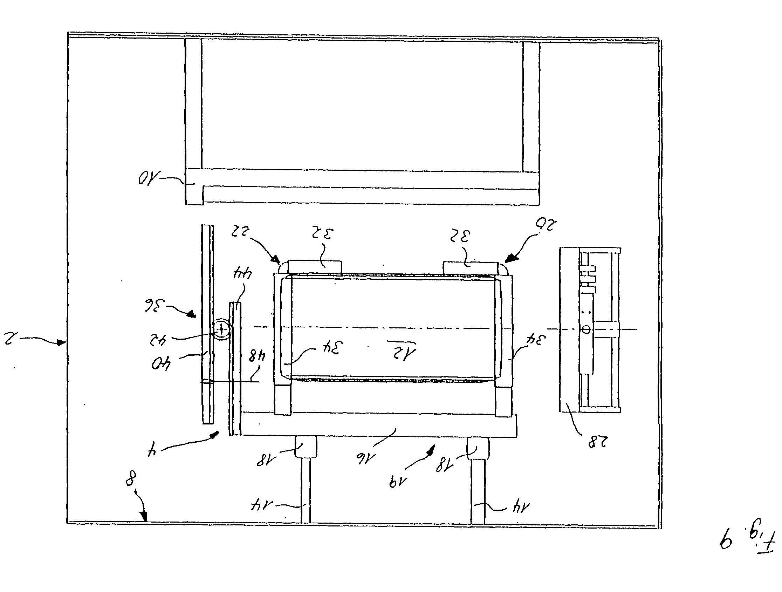

In den Figuren 8 und 9 ist eine weitere Ausführungsform der Positioniervorrichtung 36 dargestellt. Auch in dieser Ausführungsform ist ein Getriebe vorgesehen, das aus einer ersten Zahnstange 40, einem Zahnrad 42 und einer zweiten Zahnstange 44 besteht, wobei die Zahnstangen 40 und 44 mit dem Zahnrad 42 in der oben beschriebenen Weise in Eingriff sind. Die zweite Zahnstange 44 ist an dem Rahmen 19 der Röntgenprüfvorrichtung 4 angeordnet und erstreckt sich von einem Tragelement 16 vertikal in Richtung des Rollentisches 10. An der ersten Zahnstange 40 ist im Bereich deren oberen Endes ein horizontal strahlendes Lichtschrankenelement 48 angebracht, das in Richtung des Halteelements 22 gerichtet ist.

Wird der Fahrzeugreifen 12 aufwärts in Richtung der Prüfposition verfahren, bewegt sich die zweite Zahnstange 44 ebenfalls aufwärts, wodurch über das Zahnrad 42 eine Abwärtsbewegung der ersten Zahnstange 40 und des daran angebunden Lichtschrankenelements 48 erfolgt. Erfasst das Lichtschrankenelement 48 die obere Flanke des Fahrzeugreifens 12, veranlasst es, die Aufwärtsbewegung des Fahrzeugreifens 12 zu stoppen. Die Laufflächenmitte befindet sich dann in einer horizontalen Ebene mit dem Drehpunkt des Zahnrads 42 bzw. dem Zentrierpunkt der Positiioniervorrichtung 36, d.h., der Fahrzeugreifen 12 befindet sich in der vertikal vorgegebenen Prüfposition. Dies ist in der Fig. 9 dargestellt.

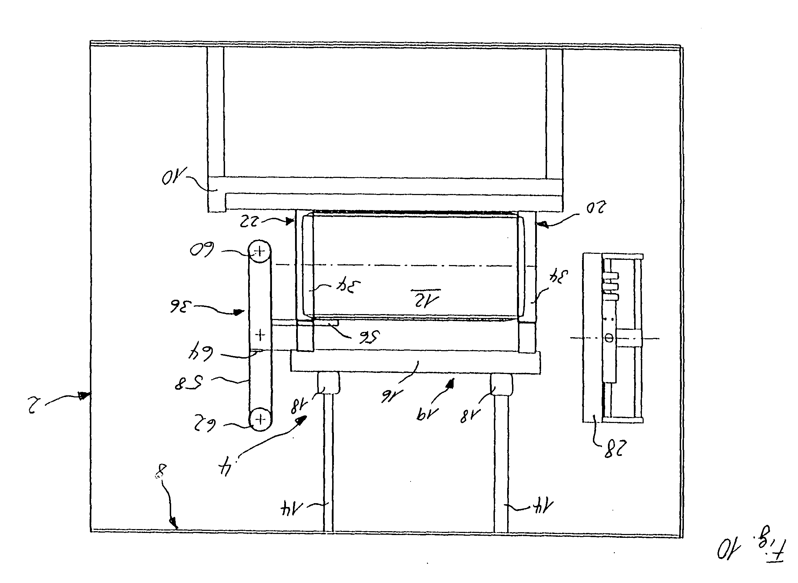

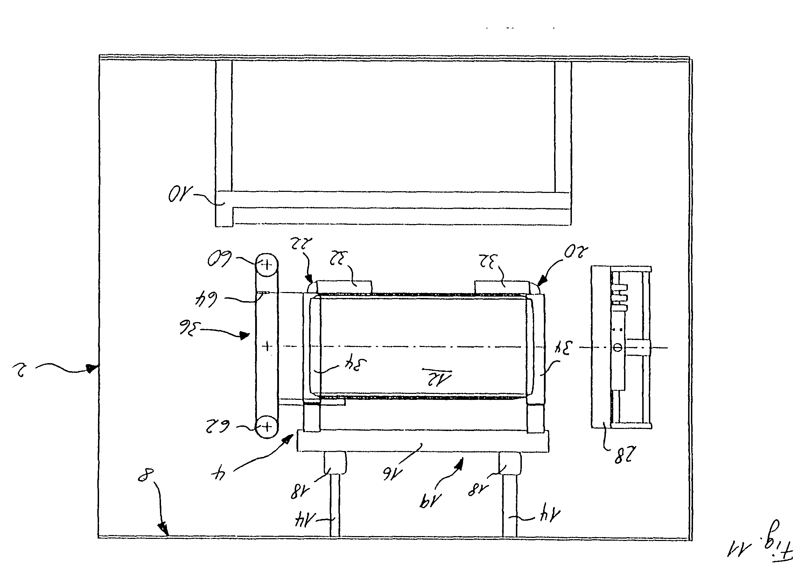

Die in den Figuren 10 und 11 dargestellte Positioniervorrichtung 36 weist ein Anschlagelement 56 auf, das an einem Zahnriemen 58 angebunden ist. Der Zahnriemen 58 ist so über ein erstes Zahnrad 60 und zweites Zahnrad 62 gespannt, dass die beiden Trums des so entstehenden Zugmittelgetriebes parallel in vertikaler Richtung verlaufen. Ferner ist an dem Zahnriemen 58 ein Lichtschrankenelement 64 so angeordnet, dass das Anschlagelement 56 und das Lichtschrankenelement 64 an den gegenüberliegenden Trums des Zugmittelgetriebes angebunden sind.

Fig. 10 zeigt die Röntgenprüfvorrichtung 4, bevor der Fahrzeugreifen 12 in die Prüfposition verbracht worden ist. An der oberen, das heißt der dem Rollentisch 10 abgewandten Flanke des Fahrzeugreifens 12 liegt das Anschlagelement 56 an. Wird der Fahrzeugreifen 12 von dem Rahmen 19 und den daran angebundenen Halteelementen 20 und 22 vertikal nach oben bewegt, wird das Anschlagelement 56 mit bewegt, wodurch es gleichzeitig durch die Umlenkung der Zahnräder 60 und 62 zu einer Abwärtsbewegung des Lichtschrankenelements 64 kommt. Erreicht das Lichtschrankenelement 64 die untere Flanke des Fahrzeugreifens 12, veranlasst ein daraus resultierendes Signal, den Antrieb des Rahmens 19 die Aufwärtsbewegung anzuhalten. Der Fahrzeugreifen 12 befindet sich in der Prüfposition, in der er zwischen den Zahnrädern 60 und 62 zentriert ist. Dies ist in der Fig. 11 dargestellt.

In den Figuren sind nur beispielhafte Ausführungen der Röntgenprüfvorrichtung 4 dargestellt. So kann deren Positioniervorrichtung 36 in jeder anderen Weise ausgebildet sein, die es erlaubt, dass ein an einer Flanke eines Fahrzeugreifens 12 anliegendes Anschlagelement mit dem Fahrzeugreifen in Richtung Prüfposition verfahren wird und damit gekoppelt ein Sensorelement in entgegengesetzter Richtung in gleichem Maße bewegt wird, bis es die entgegengesetzte Flanke des Fahrzeugreifens erfasst. Insbesondere können die verschiedenen Arten der Kopplung und die unterschiedlichen Sensorelemente beliebig kombiniert werden.

Ferner ist es denkbar, die in den Fig. 6 u. 7 dargestellte Zahnstange 36 derart zu verkürzen, dass sie erst nach einem gewissen vertikalen Verfahrweg mit dem Zahnrad 42 in Eingriff kommt und ein an einer entsprechend verkürzten Zahnstange 44 angeordnetes Anschlagelement in entgegengesetzter Richtung bewegt wird. Hierdurch könnte die Bauweite der Positioniervorrichtung 36 deutlich verkleinert werden. Auch ist es möglich auf eine mechanische Kopplung des Anschlagelements mit dem Sensorelement ganz zu verzichten und das Anschlagelement und das Sensorelement gegenläufig über Schrittmotoren o. Ä. und eine geeignete Steuerung in entsprechender Weise zu bewegen. Als Sensorelemente können neben den gezeigten Lichtschrankenelementen 48 und 64 auch Sensoren eingesetzt werden, die beispielsweise kapazitiv oder induktiv wirken. Ferner sind auch alle möglichen Kominationen der in den Figuren dargestellten Bilderfassungssysteme und Ausführungsformen der Positioniervorrichtung denkbar.

### Bezugszeichenliste

- 2: Strahlenschutzraum
- 4: Röntgenprüfvorrichtung
- 6: Querträger
- 8: Decke
- 10: Rollentische
- 12: Fahrzeugreifen
- 14: Tragelement
- 16: Tragelement
- 18: Träger
- 19: Rahmen
- 20: Halteelement
- 22: Halteelement
- 24: Tragelement
- 26: Röntgen-Rundstrahlröhre
- 28: Linearzeile
- 30: Detektor
- 31: Abschnitt
- 32: Rolle
- 33: Abschnitt
- 34: Rolle
- 36: Positioniervorrichtung
- 38: Anschlagelement
- 40: Zahnstange
- 42: Zahnrad
- 44: Zahnstange
- 46: Anschlagelement
- 48: Lichtschrankenelement
- 56: Anschlagelement
- 58: Zahnriemen
- 60: Zahnrad
- 62: Zahnrad
- 64: Lichtschrankenelement

## Patentansprüche

1. Röntgenprüfverfahren für Fahrzeugreifen (12), bei welchem die Fahrzeugreifen (12) in einer Prüfposition von Röntgenstrahlen einer Röntgenstrahlenquelle (26) durchstrahlt werden, **dadurch gekennzeichnet, dass** der Fahrzeugreifen (12) in horizontaler Lage von Halteelementen (20, 22) an seiner Außenkontur aufgenommen und in der Prüfposition gehalten wird.

2. Röntgenprüfverfahren nach Anspruch 1, **dadurch gekennzeichnet, dass** der Fahrzeugreifen (12) zwischen zumindest einem in horizontaler Richtung fest positionierten Halteelement (20) und zumindest einem relativ zu diesem fest positionierten Halteelement (20) beweglichen zweiten Halteelement (22) aufgenommen wird.

3. Röntgenprüfverfahren nach einem der vorangehenden Ansprüche, **dadurch gekennzeichnet, dass** ein Bild des von den Röntgenstrahlen durchstrahlten Fahrzeugreifens (12) von einem Bilderfassungssystem (28, 30) erfasst wird, welches zumindest in der Prüfposition in einer vorgegebenen Position relativ zu dem fest positionierten Halteelement (20) angeordnet ist.

4. Röntgenprüfverfahren nach einem der vorangehenden Ansprüche, **dadurch gekennzeichnet, dass** zum Positionieren des Fahrzeugreifens (12) in vertikaler Richtung
- zunächst ein Anschlagelement (38) an einer ersten Flanke des in horizontaler Lage angeordneten Fahrzeugreifens (12) zur Anlage gebracht und gehalten wird,
- anschließend das Anschlagelement (38) gemeinsam mit dem Fahrzeugreifen (12) in vertikaler Richtung bewegt wird, wobei ein Sensorelement (46) derart gekoppelt mit dem Anschlagelement (38) in vertikaler Richtung bewegt wird, dass es sich entgegengesetzt zu dem Anschlagelement (38) bezüglich eines vorgegebenen Zentrierpunktes stets um das gleiche Maß bewegt wie das Anschlagelement (38), und
- die vertikale Bewegung des Fahrzeugreifens (12) gestoppt wird, wenn das Sensorelement (46) die vertikale Position einer zweiten entgegengesetzt gerichteten Flanke des Fahrzeugreifens (12) erreicht und diese erfasst.

5. Röntgenprüfverfahren nach einem der vorangehenden Ansprüche, **dadurch gekennzeichnet, dass** der Fahrzeugreifen (12) von zumindest zwei an entgegengesetzten Flanken zur Anlage kommenden Greifelementen in vertikaler Richtung in der Prüfposition positioniert wird, wobei die beiden Greifelemente zumindest in einem Abschnitt ihres Bewegungsbereichs bezüglich eines Mittelpunkts der Strecke zwischen den beiden Greifelementen derart gekoppelt aufeinander zu bewegt werden, dass sich die beiden Greifelemente bezüglich des Mittelpunkts stets um das gleiche Maß bewegen.

6. Röntgenprüfverfahren nach einem der vorangehenden Ansprüche, **dadurch gekennzeichnet, dass** die Röntgenstrahlenquelle (26) auf einen fest vorgegebenen horizontalen Abstand zu dem Bilderfassungssystem (28, 30) zugestellt wird.

7. Röntgenprüfverfahren nach einem der vorangehenden Ansprüche, **dadurch gekennzeichnet, dass** der Fahrzeugreifen (12) an seiner Außenkontur in eine Drehbewegung versetzt wird, so dass der Fahrzeugreifen (12) in Umfangsrichtung um zumindest 360° relativ zu dem Bilderfassungssystem (28, 30) gedreht wird.

8. Röntgenprüfvorrichtung (4) zum Prüfen von Fahrzeugreifen (12) mit einer Röntgenstrahlenquelle (26), einem Bilderfassungssystem (28,30) sowie Halteelementen (20, 22) zum Halten und Positionieren der Fahrzeugreifen (12), **dadurch gekennzeichnet, dass** die Halteelemente (20, 22) derart ausgebildet sind, dass sie den Fahrzeugreifen (12) in horizontaler Lage an seiner Außenkontur ergreifen können.

9. Röntgenprüfvorrichtung (4) nach Anspruch 8, **dadurch gekennzeichnet, dass** die Halteelemente (20, 22) jeweils vorzugsweise mit Rollen (32, 34) versehene Anlageflächen zur Anlage an der Lauffläche und der unteren Flanke des horizontal angeordneten Fahrzeugreifens (12) aufweisen.

10. Röntgenprüfvorrichtung (4) nach Anspruch 8 oder 9, **dadurch gekennzeichnet, dass** zumindest zwei Halteelemente (20, 22) vorgesehen sind, wobei ein erstes Halteelement (20) in horizontaler Richtung fest positioniert ist und ein zweites Halteelement (22) relativ zum ersten Halteelement (20) bewegbar ist.

11. Röntgenprüfvorrichtung (4) nach einem der Ansprüche 8 - 10, **dadurch gekennzeichnet, dass** das Bilderfassungssystem (28, 30) zumindest in einer Prüfposition in einer vorgegebenen Position relativ zu dem fest positionierten ersten Halteelement (20) angeordnet ist.

12. Röntgenprüfvorrichtung (4) nach einem der Ansprüche 8 - 11, **dadurch gekennzeichnet, dass** das zweite Halteelement (22) dem ersten Halteelement (20) derart gegenüberliegend angeordnet ist, dass die Halteelemente (20, 22) den Fahrzeugreifen (12) an entgegengesetzten Seiten ergreifen können.

13. Röntgenprüfvorrichtung (4) nach einem der Ansprüche 8 - 12, **dadurch gekennzeichnet, dass** zum Positionieren des Fahrzeugreifens (12) in vertikaler Richtung ein Anschlagelement (38) zur Anlage an einer ersten Flanke des in horizontaler Lage angeordneten Fahrzeugreifens (12) und ein mit dem Anschlagelement (38) gekoppeltes Sensorelement (46) zur Erfassung einer entgegengesetzten zweiten Flanke vorgesehen sind, wobei das Anschlagelement (38) gemeinsam mit dem Fahrzeugreifen (12) in vertikaler Richtung bewegbar ist und das Sensorelement (46) derart entgegengesetzt zu dem Anschlagelement (38) bewegbar ist, dass sich das Anschlagelement (38) und das Sensorelement (46) bezüglich eines vorgegebenen Zentrierpunktes stets um das gleiche Maß bewegen.

14. Röntgenprüfvorrichtung (4) nach Anspruch 13, **dadurch gekennzeichnet, dass** zumindest als Anschlag- (38) und Sensorelement (46) zwei vertikal voneinander beabstandete und bewegbare Greifelemente zur vertikalen Positionierung des Fahrzeugreifens (12) vorgesehen sind, wobei die beiden Greifelemente zumindest in einem Abschnitt ihres Bewegungsbereichs bezüglich eines Mittelpunkts der Strecke zwischen den beiden Greifelementen derart gekoppelt aufeinander zu und voneinander weg bewegbar sind, dass sich die beiden Greifelemente bezüglich des Mittelpunkts stets um das gleiche Maß bewegen.

15. Röntgenprüfvorrichtung (4) nach Anspruch 13 oder 14, **dadurch gekennzeichnet, dass** die Kopplung des Anschlagelements (38) mit dem Sensorelement (46) mechanisch oder elektrisch ausgebildet ist.

16. Röntgenprüfvorrichtung (4) nach einem der Ansprüche 13 - 15, **dadurch gekennzeichnet, dass** die Röntgenstrahlenquelle (26) in derselben horizontalen Ebene wie der Zentrierpunkt liegt, bezüglich dem das Anschlagelement (38) und das Sensorelement (46) gekoppelt bewegbar sind.
